# EUROPEAN PATENT SPECIFICATION

(11) **EP 4 310 636 B1**
(45) Date of publication and mention of the grant of the patent: **25.03.2026**
(21) Application number: 22794683.7
(22) Date of filing: 19.04.2022
(51) Int. Cl.: G06F 1/3215, G06F 1/3231, G06F 1/3234, G06F 1/3287, G06F 3/0484, G06F 3/16, G06F 3/01, G06F 1/16, G06V 40/20

(54) **GESTURE INTERACTION METHOD, SYSTEM, AND APPARATUS**
GESTENINTERAKTIONSVERFAHREN, -SYSTEM UND -VORRICHTUNG
PROCÉDÉ, SYSTÈME ET APPAREIL D'INTERACTION GESTUELLE

(30) Priority: 27.04.2021 CN 202110462439
(43) Date of publication of application: 24.01.2024
(73) Proprietor: Huawei Technologies Co., Ltd., Shenzhen, Guangdong 518129 (CN)
(72) Inventor: MAI, Ruikai, Shenzhen, Guangdong 518129 (CN); HU, Hongwei, Shenzhen, Guangdong 518129 (CN); GAO, Wenmei, Shenzhen, Guangdong 518129 (CN)
(74) Representative: Epping - Hermann - Fischer
(86) International application number: PCT/CN2022/087720
(87) International publication number: WO 2022/228212

(56) References cited:
- CN-A- 104 699 241
- CN-U- 204 965 329
- CN-U- 211 155 811
- US-A1- 2016 091 308
- US-A1- 2016 091 980
- US-A1- 2018 035 903
- US-A1- 2021 132 699

## Description

This application claims priority to Chinese Patent Application No. 202110462439.6, filed with the China National Intellectual Property Administration on April 27, 2021 and entitled "GESTURE INTERACTION METHOD, SYSTEM, AND APPARATUS".

### TECHNICAL FIELD

This application relates to the field of smart wearing, and in particular, to a gesture interaction method, a system, and an apparatus.

### BACKGROUND

Currently, an environment adaptability of a gesture recognition technology on a smart wearable device is weak. When an environment in which recognition is performed changes significantly, a recognition capability of the foregoing gesture recognition technology is weak, and a recognition effect is poor. Therefore, user interaction experience that is based on gesture recognition is poor. US 2016/091980 A1 discloses a portable electronic device comprising: one or more light emitters capable of emitting light at a user's body part; one or more optical sensors capable of detecting a first reflectance of the emitted light, wherein the first reflectance is associated with movement of one or more tendons located in the body part; and logic capable of determining a gesture from the first reflectance and further capable of associating a command with the determined gesture.

### SUMMARY

The invention is defined by the appended claims. This application provides a gesture interaction method. By implementing the method, a smart wearable electronic device such as a smart watch may recognize a gesture with reference to a plurality of types of data of a user completing the gesture, thereby improving accuracy of gesture recognition. Further, the method provides the user with better gesture interaction experience.

According to a first aspect, an embodiment of this application provides a gesture interaction method. The method is applied to an electronic device, and the method includes: collecting first attitude data through an inertial measurement unit; collecting pulse wave data through a pulse wave sensor when collecting the first attitude data; determining, based on the first attitude data and the pulse wave data, that a user makes a first gesture; and performing a first operation in response to determining that the user makes the first gesture.

By implementing the method provided in the first aspect, the electronic device may recognize, based on attitude data and pulse wave data of the user, a gesture made by the user, to control an operation of the electronic device. Particularly, a gesture recognition algorithm that combines the attitude data and the pulse wave data can improve recognition accuracy and improve gesture recognition robustness. In this way, a probability of misrecognition of the electronic device can be reduced, and use experience of the user controlling the operation of the electronic device by using a gesture can be further improved.

With reference to some embodiments of the first aspect, in some embodiments, before the collecting first attitude data through an inertial measurement unit, the method further includes: collecting second attitude data; determining, based on the second attitude data, that the user makes a previous movement; and turning on the pulse wave sensor in response to determining that the user makes the previous movement.

By implementing the method provided in the foregoing embodiments, the electronic device may disable the pulse wave sensor and enable only the inertial measurement unit when no gesture recognition is performed, thereby reducing power consumption of the electronic device and improving standby time of the electronic device.

With reference to some embodiments of the first aspect, in some embodiments, the method further includes: lighting up a screen in response to determining that the user makes the previous movement.

In this way, the user may determine, based on whether the screen of the electronic device is lighted up, that the electronic device enters a gesture recognition state.

With reference to some embodiments of the first aspect, in some embodiments, before the determining, based on the first attitude data and the pulse wave data, that a user makes a first gesture, the method further includes: obtaining location data of the user; determining, based on the location data, that the user is in a first location; and performing the first operation if it is recognized at the first location that the user makes the first gesture.

By implementing the method provided in the foregoing embodiment, the electronic device may associate one gesture with a plurality of operations, and then determine, based on a location of the electronic device, which operation in the plurality of operations should be performed at a current location. In this way, the user uses as few gestures as possible to control more services, thereby further improving user experience.

With reference to some embodiments of the first aspect, in some embodiments, the determining, based on the first attitude data and the pulse wave data, that a user makes a first gesture specifically includes: obtaining a first attitude data block and a first pulse wave data block from the first attitude data and the pulse wave data through a first window, where the window has a first length; filtering the first attitude data block and the first pulse wave data block to obtain a second attitude data block and a second pulse wave data block; calculating first features of the second attitude data block and the second pulse wave data block; and determining, based on the features, that the user makes the first gesture.

By implementing the method provided in the foregoing embodiment, the electronic device may extract features included in attitude data and pulse wave data. By comparing these features with features of a learned attitude, the electronic device may recognize a gesture made by the user. With reference to some embodiments of the first aspect, in some embodiments, the method further includes: obtaining location data; and if it is determined that the location data is a first location, and it is recognized that the gesture made by the user is not the first gesture, displaying a first interface, where the first interface is used for prompting the user to repeat the previous gesture. By implementing the method provided in the foregoing embodiment, the electronic device may determine, based on the location data, a gesture that is most likely completed by the user at the location. When the gesture made by the user is recognized, if a recognition result is inconsistent with the gesture, the electronic device may recognize the gesture again, thereby improving accuracy of a gesture recognition result in a specific scenario.

With reference to some embodiments of the first aspect, in some embodiments, the performing a first operation specifically includes: displaying a user interface including a payment QR code.

By implementing the method provided in the foregoing embodiment, after the electronic device recognizes a gesture associated with a payment service, the electronic device may display the user interface including the payment QR code. Further, the user completes a payment operation through the payment QR code. In this way, necessity of a touch operation of opening the payment QR code by the user can be eliminated, thereby improving use experience of the user.

With reference to some embodiments of the first aspect, in some embodiments, the method further includes: turning on a microphone in response to determining that the user makes the previous movement; collecting a sound signal through the microphone; and the determining, based on the first attitude data and the pulse wave data, that a user makes a first gesture further includes: determining, based on the first attitude data, the pulse wave data, and the sound signal, whether the user makes the first gesture.

By implementing the method provided in the foregoing embodiment, the electronic device may recognize, with reference to the attitude data, the pulse wave data, and the sound signal of a gesture, the gesture made by the user, thereby further improving accuracy of gesture recognition and improving user experience.

With reference to some embodiments of the first aspect, in some embodiments, the determining, based on the first attitude data, the pulse wave data, and the sound signal, whether the user makes the first gesture specifically includes: determining, based on first features of the first attitude data and the pulse wave data, and a frequency feature of the sound signal, whether the user makes the first gesture.

By implementing the method provided in the foregoing embodiment, the electronic device may recognize, based on a feature of the attitude data, a feature of the pulse wave data, and a frequency feature of the sound signal, the gesture made by the user.

With reference to some embodiments of the first aspect, in some embodiments, first features include two or more of the following features: a wave trough feature, a vibration feature, a crest factor, a waveform factor, a root mean square frequency, and a feature that represents a degree of dispersion and concentration of a spectrum.

By implementing the method provided in the foregoing embodiment, the electronic device may determine, by calculating performance of the attitude data and the pulse wave data in terms of the foregoing features, whether the attitude data and the pulse wave data match attitude data and pulse wave data of a learned gesture, and further recognize the gesture made by the user.

With reference to some embodiments of the first aspect, in some embodiments, the attitude data includes: one or more of X-axis acceleration data, Y-axis acceleration data, Z-axis acceleration data, and three-axis acceleration amplitude data; and the pulse wave data includes: one or more of infrared light data and green light data.

By implementing the method provided in the foregoing embodiment, the electronic device may recognize the user gesture based on the foregoing data.

According to a second aspect, an embodiment of this application provides an electronic device. The electronic device includes one or more processors and one or more memories. The one or more memories are coupled to the one or more processors, the one or more memories are configured to store computer program code, and the computer program code includes computer instructions. When the one or more processors execute the computer instructions, the electronic device is enabled to perform the method described in any one of the first aspect and the possible implementations of the first aspect.

According to a third aspect, an embodiment of this application provides a chip system. The chip system is applied to an electronic device. The chip system includes one or more processors. When the processor is configured to invoke computer instructions, the electronic device is enabled to perform the method described in any one of the first aspect and the possible implementations of the first aspect.

According to a fourth aspect, an embodiment of this application provides a computer program product including instructions. When the computer program product runs on an electronic device, the electronic device is enabled to perform the method described in any one of the first aspect and the possible implementations of the first aspect.

According to a fifth aspect, an embodiment of this application provides a computer-readable storage medium, including instructions. When the instructions are run on an electronic device, the electronic device is enabled to perform the method described in the any one of first aspect and the possible implementations of the first aspect.

It may be understood that the electronic device provided in the second aspect, the chip system provided in the third aspect, the computer program product provided in the fourth aspect, and the computer storage medium provided in the fifth aspect are all configured to perform the method provided in embodiments of this application. Therefore, for beneficial effects that can be achieved, refer to beneficial effects in a corresponding method. Details are not described herein again.

### BRIEF DESCRIPTION OF DRAWINGS

FIG. 1 is a system diagram according to an embodiment of this application;
FIG. 2A is a flowchart of a gesture interaction method according to an embodiment of this application;
FIG. 2B and FIG. 2C are schematic diagrams of a set of user gestures according to an embodiment of this application;
FIG. 3A is a learning flowchart of an electronic device learning user gestures according to an embodiment of this application;
FIG. 3B is a set of training data according to an embodiment of this application;
FIG. 4 is a timing diagram according to an embodiment of this application;
FIG. 5 is a flowchart of another gesture interaction method according to an embodiment of this application;
FIG. 6A and FIG. 6B are flowcharts of another two gesture interaction methods according to an embodiment of this application;
FIG. 7 is a flowchart of another gesture interaction method according to an embodiment of this application; and
FIG. 8 is a diagram of a hardware structure of an electronic device according to an embodiment of this application.

### DESCRIPTION OF EMBODIMENTS

Terms used in the following embodiments of this application are merely intended to describe specific embodiments, but are not intended to limit this application.

Human-computer interaction of an electronic device such as a smart watch or a wristband is mainly implemented through a touchscreen of a watch face. For example, a user may control such an electronic device by tapping a control displayed on the watch face with a finger. Compared with an electronic device such as a mobile phone or a tablet computer, due to a limitation of a screen size, it is difficult for the electronic device such as the smart watch or the wristband to support a more intuitive user interface design, thereby causing a complicated user operation. At the same time, due to a smaller screen of the watch face, various elements of a user interface are correspondingly smaller. A user is more likely to touch the touchscreen by mistake in a process of using the touchscreen. This further degrades user experience.

A gesture recognition technology can resolve the foregoing problems of a complicated operation and accidental touch. The gesture recognition technology here refers to a technology in which a wearable device worn on a hand of the user, for example, a watch or a wristband, which recognizes a gesture made by the user by obtaining attitude data or physiological data of the hand. However, a scenario generalization capability of an existing gesture recognition technology is poor. When a scenario changes greatly, a recognition result of gesture recognition is unstable and accuracy is low. For example, a gesture recognition technology based on a nerve conduction sensor has a good gesture recognition effect in a scenario in which the nerve conduction sensor is in close contact with skin. However, when the user wears a watch loosely, so that the sensor is not in close contact with skin, a gesture recognition effect is not ideal, or a recognition effect of the technology is not ideal in a case of hot sweating.

The scenario here refers to an environment in which the user makes a gesture, for example, an outdoor walking environment, or a playground with strong illumination.

Another gesture recognition technology, for example, a gesture recognition technology based on low frequency inertial measurement unit (inertial measurement unit, IMU) perception, a gesture recognition technology based on photoplethysmography (photoplethysmography, PPG) perception, and a gesture recognition technology based on ultrasonic radar or millimeter wave radar perception, also has the same problem. In other words, in some scenarios, the recognition effect is very unsatisfactory. For example, in a scenario in which the user is in a non-static state, for example, outdoor walking, a recognition effect of a gesture recognition technology based on the IMU perception is poor. Under strong sunlight, a recognition effect of a gesture recognition technology based on the PPG perception is poor.

To enhance the scenario generalization capability of the gesture recognition technology, the gesture recognition technology has a good recognition effect in different subdivision scenarios, that is, robustness of the gesture recognition technology is improved. Embodiments of this application provide a gesture interaction method, a system, and an apparatus. The method may be applied to a smart wearable electronic device such as a smart watch or a wristband.

The smart watch is used as an example. In a process of implementing the method, the smart watch may simultaneously obtain, from a plurality of sensors, data indicating a gesture type (which is gesture feature data). For example, an IMU collects data that includes an attitude feature of a gesture, and a pulse wave sensor collects data that includes a pulse wave feature of a gesture. By learning gesture feature data of different gestures sent by the plurality of sensors, the smart watch may obtain a fusion model, that is, a gesture classifier. Through the gesture classifier, the smart watch may recognize gesture feature data, and further may recognize a gesture completed by a user. Then, based on an association relationship between a gesture and a service, the smart watch may invoke, based on a recognized gesture, a service of an application program associated with the gesture. Further, the smart watch can perform the service.

For example, it is assumed that a finger rubbing gesture is associated with a service of displaying a payment QR code. When recognizing that the user makes the finger rubbing gesture, the smart watch may invoke the service of displaying the payment QR code based on the foregoing matching relationship. Therefore, the user may complete a payment operation through the payment QR code. In this way, the user may control the smart watch to display the payment QR code by completing one finger rubbing gesture, thereby avoiding a complicated operation of touching a screen for a plurality of times, and improving user experience.

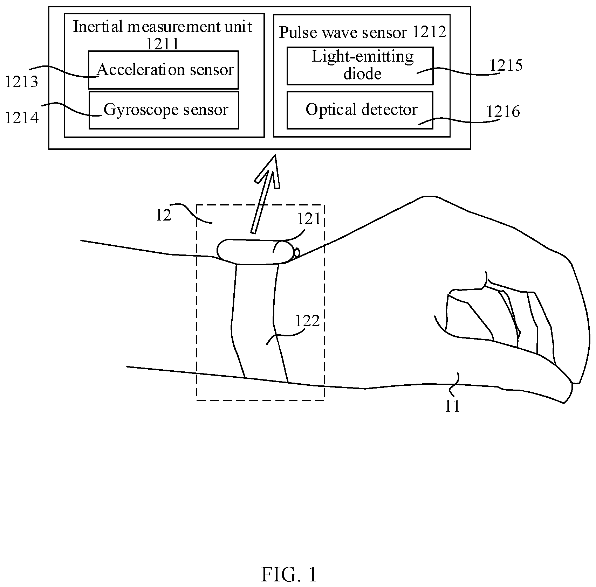

With reference to FIG. 1, the following describes a system of the gesture interaction method in an embodiment of this application.

As shown in FIG. 1, using a finger rubbing gesture as an example, a scenario in which the gesture interaction method is implemented includes a user (hand) 11 and a smart watch 12. The smart watch 12 may include a watch face 121 and a watch band 122.

A plurality of sensors are mounted in the watch face 121. The sensors may be configured to obtain various signals or data in a process in which the user completes the finger rubbing gesture. The sensors include an inertial measurement unit (IMU) 1211 and a pulse wave sensor 1212. The inertial measurement unit 1211 may be configured to obtain attitude data of a hand of the user when a specific gesture is completed. The attitude data here refers to data describing a location and a specific posture of a gesture, and a corresponding bio-vibration wave. The pulse wave sensor 1212 may be configured to obtain pulse wave data when the user completes the specific gesture. The inertial measurement unit 1211 (IMU) includes an acceleration sensor 1213 and a gyroscope sensor 1214. The acceleration sensor 1213 may measure acceleration data in an X axis, a Y axis, and a Z axis when the specific gesture is completed. The gyroscope sensor 1214 may measure angular velocity data in the X axis, the Y axis, and the Z axis when the specific gesture is completed. Through the foregoing two sensors, the IMU may recognize the location and a posture of the user gesture.

The pulse wave sensor 1212 includes a light-emitting diode (light-emitting diode, LED) 1215 and an optical detector 1216 (for example, photodiode, photodiode, PD). The light-emitting diode 1215 may emit light in a process of the user completing the specific gesture (emitted light). The optical detector 1216 may collect the emitted light reflected through blood vessels of the hand (reflected light). A change in a blood vessel volume and a blood flow rate can cause a change in the reflected light. Therefore, the pulse wave sensor 1212 may describe the change in the blood vessel volume and the blood flow rate by detecting the change in the reflected light, and further describe a change in a pulse wave when the user completes the specific gesture.

For example, the emitted light may be green light, infrared light, or the like. This is not limited in embodiments of this application. In some embodiments, the emitted light may further include a plurality of light sources, for example, two light-emitting diodes (green light and infrared light) are simultaneously installed.

In a process in which the user completes the finger rubbing gesture, a hand of the user may present a posture shown in FIG. 1. With reference to FIG. 1, the finger rubbing gesture refers to a gesture in which a thumb touches and rubs back and forth two times to three times with an index finger (or another finger).

In a process of completing the foregoing actions, the hand of the user may be deformed and vibrated, and the blood vessel volume and the blood flow rate of the hand may change due to the foregoing vibration and deformation, thereby causing a change in reflected light passing through the hand. In this case, the inertial measurement unit 1211 may collect vibration and deformation signals, and generate attitude data of the finger rubbing gesture. In addition, the pulse wave sensor 1212 may collect the reflected light of the hand, and generate pulse wave data of the finger rubbing gesture. Due to back and forth rubbing behavior of the finger rubbing gesture, the attitude data and the pulse wave data of the finger rubbing gesture may change periodically. Therefore, the smart watch may determine, through the foregoing periodic change, whether a gesture made by the user is a finger rubbing movement.

Different gestures correspond to different attitude data and pulse wave data. Based on the foregoing conclusion, the smart watch may determine, by analyzing features of different attitude data and pulse wave data, a type of gesture indicated by the attitude data and the pulse wave data. Specifically, in the process of completing the finger rubbing gesture, the attitude data that is of the finger rubbing gesture and that is collected by the inertial measurement unit 1211 and the pulse wave data that is of the finger rubbing gesture and that is collected by the pulse wave sensor 1212 may include features of the finger rubbing movement. For example, a time domain wave trough feature, a vibration feature, a crest factor, a waveform factor, and the like of the attitude data and the pulse wave data. The features are used for describing a time-domain waveform of the attitude data and the pulse wave data.

After the attitude data and the pulse wave data are input into a gesture classifier, the gesture classifier may extract features of finger rubbing from the attitude data and the pulse wave data. Further, the gesture classifier may determine that a gesture indicated by the attitude data and the pulse wave data is the finger rubbing gesture. Therefore, the smart watch may determine that the user performs the finger rubbing gesture. In response to the attitude, the smart watch may invoke a service associated with the finger rubbing gesture, for example, displaying a payment QR code.

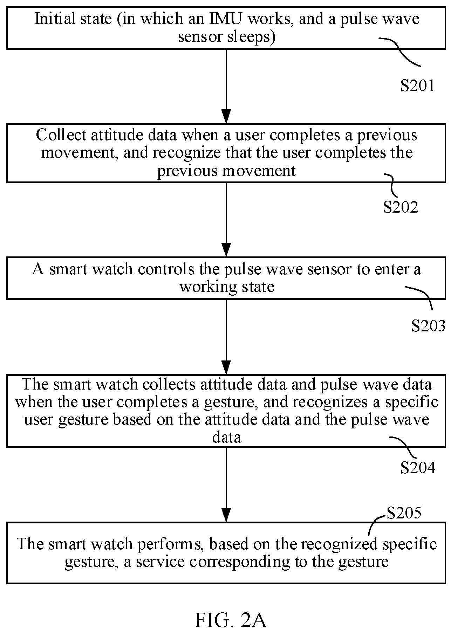

**With reference to** **FIG. 2A****, the following embodiment of this application describes the gesture interaction method in detail.**

**S201: Initial state (in which an IMU works, and a pulse wave sensor sleeps).**

As shown in FIG. 2A, **before a user makes a specific gesture, a smart watch may be in the initial state.** In this case, the inertial measurement unit (IMU) of the smart watch may be in a working state, and the pulse wave sensor may be in a sleep state. The working state here refers to a state in which the IMU can detect a hand movement of the user and obtain attitude data in real time. Contrary to the working state, when being in the sleep state, the pulse wave sensor does not generate emitted light, and does not detect reflected light. Therefore, the pulse wave sensor cannot obtain pulse wave data of the user. The pulse wave sensor in the sleep state can be woken up to enter the working state.

**S202: The smart watch collects attitude data of the user, and recognizes that the user completes a previous movement.**

Before completing a specific gesture, the user completes a previous movement. For example, before completing a finger rubbing gesture, the user first lifts a naturally hanging wrist (which is wrist lifting), and this wrist lifting movement may be considered as a previous movement. Not limited to the wrist lifting, the previous movement may also be other types of hand movement, which are not listed one by one herein. The smart watch can recognize the previous movement. Specifically, in a process of completing the previous movement, an arm and a wrist of the user may move significantly. A location and a posture of the arm and the wrist significantly change accordingly. In this case, attitude data of a hand of the user collected by the IMU also significantly changes accordingly. Therefore, in a process in which the user makes the previous movement, the attitude data of the hand of the user collected by the IMU may include features of the location and the posture of the previous movement. Therefore, the smart watch may detect, through the IMU, whether the user completes the previous movement.

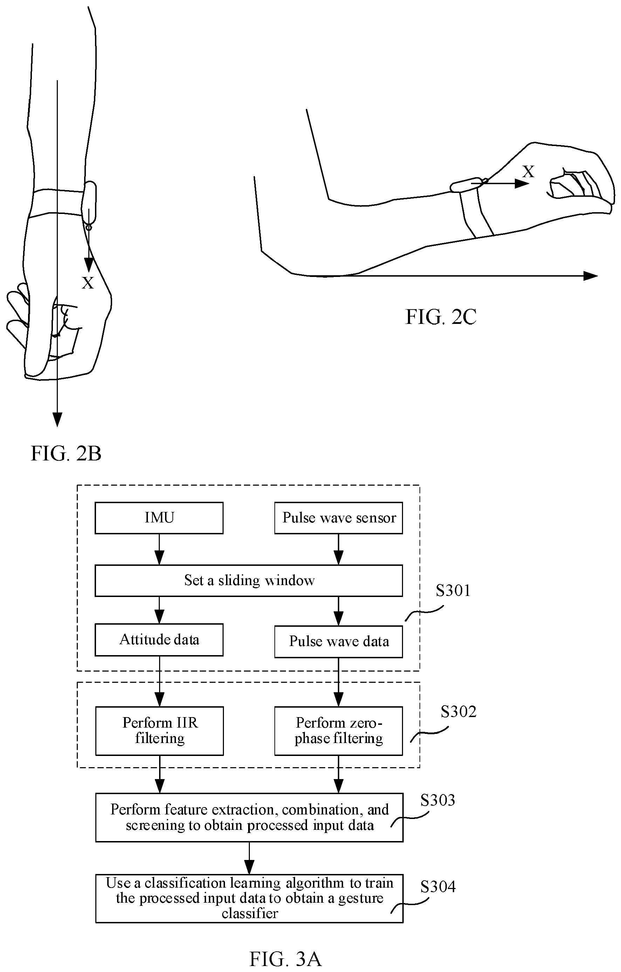

Refer to FIG. 2B. In a process of the wrist lifting, an upper arm and a lower arm of the user may be converted from the location and the posture of naturally hanging (FIG. 2B) to a location and a posture of the upper arm and the lower arm forming an approximate right angle (FIG. 2C). For example, an X axis of an accelerometer of the IMU may change from vertical downward as shown in FIG. 2B to horizontal rightward as shown in FIG. 2C. In this case, the attitude data of the hand of the user collected by the IMU may include the foregoing changes. When detecting the foregoing changes, the smart watch may confirm that the user completes the previous movement. The foregoing method for recognizing, through an X-axis accelerometer, whether the user makes the previous movement may be referred to as horizontal detection.

Not limited to the method shown in the horizontal detection, the smart watch may further determine, by detecting a height change value of the wrist of the user through the IMU, whether the user makes the previous movement. The height change value is preset. For example, the height change value may be 50 cm. After the smart watch detects that a height of the wrist is increased by 50 cm or more than 50 cm, the smart watch may determine that the user makes the previous movement.

When the user does not complete the previous movement, the IMU cannot collect attitude data including features of the previous movement. Therefore, the smart watch cannot detect the previous movement. Attitude data collected by the IMU is continuously performed. Therefore, the smart watch can continuously recognize whether the user makes the previous movement.

**S203: The smart watch controls the pulse wave sensor to enter the working state.**

After recognizing the previous movement, the smart watch may turn on the pulse wave sensor. In this case, both the IMU and the pulse wave sensor enter the working state. Then, the smart watch may simultaneously obtain the attitude data and the pulse wave data of the user.

Specifically, after recognizing that the user makes the previous movement, the smart watch may send a control signal to the pulse wave sensor. In response to the control signal, the pulse wave sensor enters the working state from the sleep state. In the working state, a light-emitting diode (LED) of the pulse wave sensor may emit green light. At the same time, an optical detector may obtain green light reflected by a blood vessel, and convert an optical signal of reflecting the green light into an electrical signal for recording, to obtain the pulse wave data of the user.

Before recognizing the previous movement, the smart watch may only turn on the IMU. The pulse wave sensor enters the working state only after the IMU recognizes that the user completes the previous movement. In this way, the smart watch can enable the pulse wave sensor only when performing gesture recognition. At another time, the smart watch does not need to turn on all sensors, thereby reducing overall power consumption and extending use time.

After recognizing that the user completes the previous movement, the smart watch may further light up a screen, that is, enter a screen-on state. In the screen-on state, both the IMU and the pulse wave sensor are in the working state. In addition, the user may also learn, through the screen-on state, that the smart watch has entered a state of recognizing a gesture.

**S204: The smart watch collects attitude data and pulse wave data when the user completes the gesture, and recognizes the specific user gesture based on the attitude data and the pulse wave data.**

According to the foregoing description, after the previous movement is recognized, both the IMU and the pulse wave sensor of the smart watch are in the working state. In other words, after recognizing the previous movement, the smart watch may simultaneously obtain the attitude data and the pulse wave data after the user completes the previous movement.

After completing the previous movement, the user may make a specific gesture. For example, after completing the wrist lifting, the user may immediately make the finger rubbing gesture. In addition, the user may also learn, through an operation of lighting up the screen of the smart watch, that the smart watch has enabled a gesture recognition function. Furthermore, the user may complete the specific gesture, to indicate that the smart watch completes a corresponding service.

In this case, the attitude data and the pulse wave data that are collected by the IMU and the pulse wave sensor may include features of the specific gesture. Based on the feature, the smart watch may recognize the gesture made by the user. For example, the attitude data and the pulse wave data may include features of the finger rubbing gesture (since data generated by a thumb pressing and rubbing back and forth with an index finger or a middle finger periodically changes). Furthermore, based on the foregoing features, the smart watch may recognize the finger rubbing gesture made by the user.

The specific gesture here refers not only to a general typical gesture, for example, a gesture such as fist clenching, finger snapping, and the finger rubbing as shown in FIG. 1. In addition, the specific gesture further indicates that the gesture is a gesture learned by a gesture classifier, that is, a gesture that can be recognized by the smart watch through the gesture classifier.

Specifically, the smart watch may include a gesture classifier. The gesture classifier is a classifier model obtained by the smart watch learning gesture feature data of different gestures. The model records features of various types of learned gestures. The model may determine, by extracting features of data input to the model, whether the data is the foregoing learned specific gesture.

A process of obtaining the gesture classifier by the smart watch learning the gesture feature data through a gesture recognition algorithm is described in detail in subsequent embodiments, and is not described herein.

The smart watch may recognize a user gesture within a preset duration. The smart watch may recognize the attitude data and the pulse wave data that are generated within the preset duration. For example, the smart watch may determine that seven seconds after the pulse wave sensor enters the working state is the time for recognizing the specific user gesture.

During the seven seconds, both the IMU and the pulse wave sensor are in the working state. Therefore, the smart watch can obtain continuously generated attitude data and pulse wave data. In a process in which the IMU and the pulse wave sensor collect the attitude data and the pulse wave data, the IMU and the pulse wave sensor may send collected data to the gesture classifier when collecting data. The attitude data and the pulse wave data input to the gesture classifier may be referred to as input data.

Specifically, the IMU and the pulse wave sensor can send the collected data to the gesture classifier in a fixed-length packet size. For example, after collecting 10 data points, the IMU may send the 10 data points to the gesture classifier at the same time. The same is true for the pulse wave sensor. After receiving 100 data points sent by the IMU, that is, after receiving the data sent by the sensor for 10 times, the gesture classifier may determine the 100 data points as a set of attitude input data. The foregoing process may be referred to as: using a window having a length of 100 to divide the collected attitude data and the pulse wave data. Similarly, the gesture classifier may further receive attitude data sent by the pulse wave sensor, and perform division by using 100 points as a set. A set of attitude input data and a set of pulse wave input data in a same time period may be used by the gesture classifier to recognize whether the user makes the specific gesture in the same time period.

It may be understood that the 10 data points and the 100 data are all examples for description, and should not constitute a limitation on this embodiment of this application.

After obtaining the input data, the gesture classifier may perform filtering processing on the data, and calculate features of the data. By comparing the foregoing features with the feature of the gesture learned by the gesture classifier, the gesture classifier may recognize a gesture indicated by the input data.

For example, in a process in which the user completes the finger rubbing gesture, the gesture classifier may receive a set of input data (which is 100 attitude data points and 100 pulse wave data points in the same time period). The gesture classifier may calculate features of the input data, for example, a wave crest or a wave trough of attitude data in the input data. Then, the gesture classifier may determine that the features of the input data match the feature of the learned finger rubbing gesture. In this case, the smart watch confirms the recognition that the user makes the finger rubbing gesture.

In the preset duration, the gesture classifier usually cannot recognize, based on first input data, whether the user makes the specific gesture. This is because a machine usually divides a data block in milliseconds. Within several (or first dozens of data blocks) corresponding time, the user may not make a gesture, or just make the gesture, and the gesture is not completed.

Moreover, in a process in which the gesture classifier recognizes the first input data, the IMU and the pulse wave sensor are still collecting the attitude data and the pulse wave data of the user. Therefore, the IMU and the pulse wave sensor are still continuously sending the attitude data and the pulse wave data to the gesture classifier.

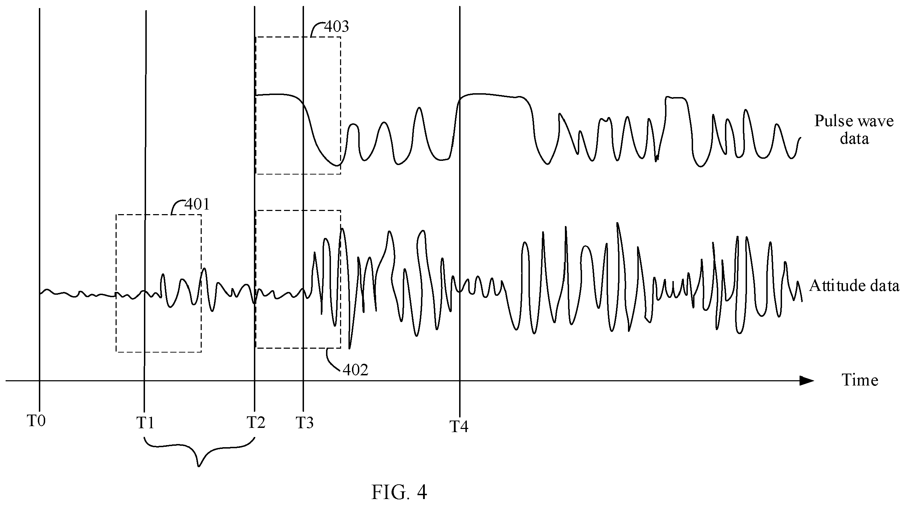

Therefore, when failing to recognize the specific user gesture based on the first input data, the gesture classifier may re-determine a set of input data from the attitude data and the pulse wave data that are sent by the IMU and the pulse wave sensor. Re-determining a set of input data here may be completed through a sliding window (FIG. 4) described in the subsequent embodiment, which is not described herein.

The gesture classifier may then re-recognize whether the user makes the specific gesture. In other words, when the gesture classifier cannot recognize the specific user gesture based on a set of input data, the gesture classifier may re-obtain input data from the IMU and the pulse wave sensor.

Certainly, there is a time limit for the re-obtained input data. This limitation is the preset duration described above. Before the preset duration ends, if the smart watch recognizes the specific user gesture, in this case, the smart watch may perform a service associated with the gesture, and no longer perform recognition. After the preset duration ends, if the smart watch still does not recognize a movement of the user, the smart watch does not continue to recognize the movement, that is, timeout ends.

In addition, in a process of obtaining input data several times described above, the smart watch may further simultaneously detect whether the user performs a screen touch operation. When detecting that the user performs the screen touch operation, the smart watch may end the gesture recognition process.

**S205: The smart watch performs, based on the recognized specific gesture, a service corresponding to the gesture.**

After the gesture classifier recognizes the specific gesture, the smart watch may obtain the service corresponding to the specific gesture. Then, the smart watch may perform the service.

For example, the finger rubbing gesture may be associated with a payment service. When the gesture classifier recognizes the finger rubbing gesture, that is, when the smart watch detects that the user completes the finger rubbing gesture, in response to the gesture, the smart watch may open an application including a payment function, and further display a payment QR code. The application including the payment function is, for example, Alipay^{®} and WeChat Pay^{®}.

In the gesture interaction method shown in FIG. 2A, the smart watch may simultaneously obtain the attitude data and the pulse wave data when the user completes the specific gesture. In addition, the smart watch may recognize the gesture made by the user with reference to the foregoing two types of data. When the types of data input in the gesture classifier increase, features of the indicated gestures that can be found by the smart watch are also increased accordingly. This facilitates the smart watch to recognize the user gesture. Therefore, robustness of gesture recognition can be improved by a method that combines the foregoing two types of data to recognize the user gesture.

In this way, the smart watch may find more features of the gesture based on the attitude data and the pulse wave data. Furthermore, in a scenario such as a motion scenario or a strong sunlight scenario, the smart watch can also recognize the user gesture from more features, to better and more accurately recognize the user gesture. This also resolves a problem that gesture recognition is inaccurate due to a scenario change.

**With reference to a flowchart of the gesture recognition algorithm as shown in** **FIG. 3A****, the following embodiment of this application describes a process in which the gesture recognition algorithm learns each gesture to obtain a gesture classifier in detail.**

As shown in FIG. 3A, the gesture recognition algorithm may first obtain attitude data and pulse wave data of the indicated gesture from an IMU and a pulse wave sensor **(S301).** The attitude data and the pulse wave data are training samples of the gesture recognition algorithm for learning the user gesture. The attitude data includes X-axis acceleration data, Y-axis acceleration data, Z-axis acceleration data, and three-axis amplitude data of an accelerometer. The X axis, Y axis, and Z axis constitute a spatial coordinate system. Directions specifically indicated by the X axis, the Y axis, and the Z axis are not limited in this application. The pulse wave data includes a PPG infrared light signal and a PPG green light signal.

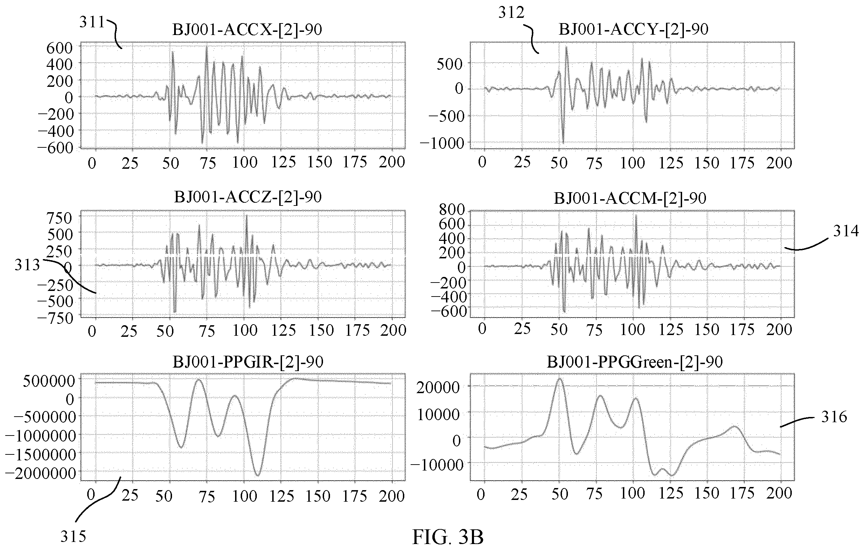

FIG. 3B shows an example of a set of data indicating a finger rubbing gesture in the training sample. Graph 311 is a set of X-axis acceleration data samples of the finger rubbing gesture. Graph 312 is a set of Y-axis acceleration data samples of the finger rubbing gesture. Graph 313 is a set of Z-axis acceleration data samples of the finger rubbing gesture. Graph 314 is a set of three-axis amplitude data samples of the finger rubbing gesture. Graph 315 is a set of PPG infrared light signal samples of the finger rubbing gesture. Graph 316 is a set of PPG green light signal samples of the finger rubbing gesture.

It is to be understood that processing and calculation of the attitude data and the pulse wave data in the subsequent embodiments are actually processing and calculation of various data included in the attitude data and the pulse wave data.

First, the gesture recognition algorithm may receive a large amount of gesture data (the attitude data and the pulse wave data). A data point of the attitude data and a data point of the pulse wave data may indicate an attitude of the user gesture and a pulse wave of a hand at a moment. The large amount of attitude data and pulse wave data constitute a gesture change and a pulse wave change of the hand of the user in the time domain.

Therefore, before learning the attitude data and the pulse wave data of the gesture, the gesture recognition algorithm may segment the gesture data in a long time period by setting a sliding window.

For example, a length of the sliding window may be 200 data points, and a step size may be 10 data points. In other words, a sliding window may include 200 data points, and the window may move on a time-domain axis by a length of 10 data points in each step, thereby updating data in the window. It is to be understood that a length of data segmented by the sliding window is consistent with a length of the data block recognizing the gesture described in FIG. 2A herein.

After the sliding window processing, continuous attitude data and pulse wave data are divided into fixed-length data blocks. The fixed length is a length of the window. Then, the gesture recognition algorithm may extract features of the data blocks.

Certainly, before feature extraction, the gesture recognition algorithm needs to perform filtering processing on the data blocks. Filtering here refers to filtering out noise contained in original data, for example, motion noise and heart rate noise. The motion noise here refers to noise generated when the user completes a gesture in a motion process. Heart rate noise is included in the pulse wave data because of vasoconstriction and vasodilation caused by heart movement. Vasoconstriction and vasodilation can affect a change of blood vessel volume caused by the gesture. Therefore, the pulse wave data collected by the pulse wave sensor includes non-gesture noise such as the heart rate noise. The filtering processing can reduce interference caused by the noise. Therefore, the gesture recognition algorithm needs to perform filtering processing on the input data before the feature extraction (S302).

In this embodiment of this application, the gesture recognition algorithm may use an infinite impulse response (Infinite Impulse Response, IIR) Chebyshev (Chebyshev) filter to perform filtering processing on the attitude data collected by the IMU. A first-order Butterworth (Butterworth) digital filter is used for filtering the pulse wave data collected by the pulse wave sensor. Not limited to the filtering algorithm mentioned above, another filtering algorithm may be used for the gesture recognition algorithm to filter the input data.

**S303: The gesture recognition algorithm performs feature extraction, combination, and screening to obtain processed input data.**

After completing the filtering operation described above, the gesture recognition algorithm may begin to extract the features of the input data.

In this embodiment of this application, the gesture recognition algorithm may manually design K-type features for the input data. The features include a time domain feature and a frequency domain feature of the input data. The features are, for example, a wave trough feature and a vibration feature. After feature construction, extraction and feature combination, the K-type features can be further expanded to obtain more features.

Then, by considering the requirements of real-time and efficiency of an algorithm, the gesture recognition algorithm can screen preferred features from the more features (for example, a crest factor, a waveform factor, a root mean square frequency, and the degree of dispersion and concentration representing a spectrum). The preferred features here refer to features that make a large contribution to gesture recognition of the gesture recognition algorithm. In other words, based on the preferred features, the smart watch can effectively reduce computing overheads of the gesture recognition algorithm without sacrificing recognition accuracy.

Data corresponding to the preferred features obtained through the feature extraction, combination, and screening may be referred to as the processed input data.

**S304: The gesture recognition algorithm uses a classification learning algorithm to train the processed input data to obtain the gesture classifier.**

After the preferred features are determined, the gesture recognition algorithm may train the processed input data through the classification learning algorithm, to obtain a gesture determining model, that is, the gesture classifier. The classification learning algorithm includes but is not limited to a support vector machine (Support Vector Machine, SVM), an extreme gradient boosting (Extreme Gradient Boosting, XGBoost), and a random forest (Random Forest, RF).

Then, the smart watch may recognize, through the gesture classifier, input data indicating a specific gesture, to determine that the user completes the specific gesture.

In a process in which the gesture classifier recognizes the specific gesture, the gesture classifier may process the obtained original input data with reference to the method as shown in S301 and S302. The foregoing processing includes sliding window segmentation and filtering processing. After the foregoing processing is performed, the gesture classifier may obtain input data (the attitude data and the pulse wave data) of a fixed length after noise reduction. Then, with reference to the method as shown in S303, the gesture classifier may check, based on set K-type features, whether the input data meets the requirements of each feature. When values of the K-type features of the input data fall within a specific threshold interval of the K-type features of a specific gesture, the gesture classifier recognizes that the gesture indicated by the input data is the specific gesture. For example, when the values of the K-type features of the input data fall within a specific threshold interval of the K-type features of the finger rubbing gesture, the gesture classifier recognizes that the gesture indicated by the input data is the finger rubbing gesture.

After recognizing the specific gesture, the smart watch may invoke, based on the specific gesture, an application associated with the gesture, and perform an application service associated with the gesture.

According to the method as shown in FIG. 3A, the smart watch may learn features of various gestures through the gesture recognition algorithm, including features of data collected by the IMU when the gesture is completed and features of data collected by the pulse wave sensor. In this way, when the user completes the specific gesture, the smart watch may recognize the user gesture. In response to the gesture, the smart watch may perform a service associated with the gesture. With reference to FIG. 4, the following further describes a sequence diagram of the IMU and the pulse wave sensor obtaining the input data in a process in which the user completes the finger rubbing gesture.

As shown in FIG. 4, a horizontal coordinate of the sequence diagram may represent time. Data near an abscissa axis may represent the attitude data collected by the IMU. Data in the attitude data may represent the pulse wave data collected by the pulse wave sensor. Particularly, the attitude data and the pulse wave data in FIG. 4 are merely examples. Refer to the foregoing description of FIG. 3B, the attitude data includes X-axis acceleration data, Y-axis acceleration data, Z-axis acceleration data, and the like. The pulse wave data includes infrared light, green light, and the like.

T0 may be any time point. T1 is a moment at which a previous movement starts. T2 is a moment at which the previous movement is completed, that is, a moment at which the smart watch starts to recognize the specific user gesture. T3 is a moment at which the finger rubbing gesture starts. Because a moment at which the previous movement ends is not necessarily the moment at which the finger rubbing gesture starts, T2 and T3 are not necessarily the same moment. T4 is a moment at which the finger rubbing gesture ends.

T0-T1 shows attitude data in an initial state. T1-T2 shows attitude data when the user completes the previous movement. T3-T4 shows attitude data and pulse wave data when the user completes the finger rubbing gesture.

During T0-T1, refer to the description of S201, the IMU is in the working state, and the pulse wave sensor may be in the sleep state in consideration of power consumption. Therefore, in this time period, the pulse wave sensor does not collect the pulse wave data of the user. At the moment T1, the user starts to make the previous movement, and completes the previous movement at the moment T2. Based on the attitude data in T1-T2, the smart watch may detect that the user makes the previous movement. In this case, the smart watch may control the pulse wave sensor to enter the working state. Therefore, at the moment T2, the smart watch may obtain the pulse wave data of the user collected by the pulse wave sensor.

Starting from the moment T0, the smart watch may segment attitude data stream collected by the IMU into a discrete data frame set in a manner of dividing data through the sliding window, with reference to a window 401. Specifically, the smart watch may set a window with a length of S, and the window may slide on a time axis based on a step size D, to obtain a plurality of sets of attitude data and pulse wave data with the length of S. For example, a window with a length of 100 and a step size of 10 is described in S301 in FIG. 3A. Based on the window, the smart watch may obtain a plurality of sets of attitude data and pulse wave data with the length of 100.

When the window slides to the moment T2, attitude data in the window is as shown in a window 402.

After the moment T2, the smart watch can receive the attitude data collected by the IMU, and can further receive the pulse wave data collected by the pulse wave sensor. In this case, the smart watch may also intercept the pulse wave data of the user through a window of the same size, for example, a window 403.

With reference to the description of S301, a window may not include complete attitude data or pulse wave data of a gesture due to a relationship of a start location. To improve recognition accuracy and robustness, recognition results of T consecutive sliding windows may be synthesized in a majority voting manner, and a final recognition result is output.

For example, T3-T4 shows the attitude data and the pulse wave data when the user completes the finger rubbing gesture. Therefore, when the sliding window is within a T3-T4 time period, data included in the sliding window may be used for recognizing the user gesture. That is, the gesture recognition algorithm may calculate features of the data in the foregoing window, to recognize that the user completes the finger rubbing gesture.

When the specific gesture cannot be recognized during recognition of input data in T3-T4, the gesture classifier may continue to obtain data that is subsequently collected by the sensor, and determine whether the data is the attitude data and the pulse wave data that correspond to the specific gesture. This is because the IMU and the pulse wave sensor may continuously collect the attitude data and the pulse wave data of the user when the specific user gesture is not recognized and before the preset time ends. As shown in FIG. 4, after the moment T4, the smart watch may further receive the attitude data and the pulse wave data of the user.

Therefore, when failing to recognize the gesture completed by the user, the smart watch may further re-recognize whether the user completes the specific gesture based on newly received attitude data and pulse wave data, that is, attitude data and pulse wave data after the window 402 and the window 403.

After recognizing the specific user gesture, the smart watch performs the service associated with the specific gesture.

When energy consumption is considered, in the gesture interaction method described in FIG. 2A, the pulse wave sensor is not set to the working state at the beginning. Instead, after the IMU detects the previous movement, the pulse wave sensor is activated, so that the pulse wave sensor enters the working state.

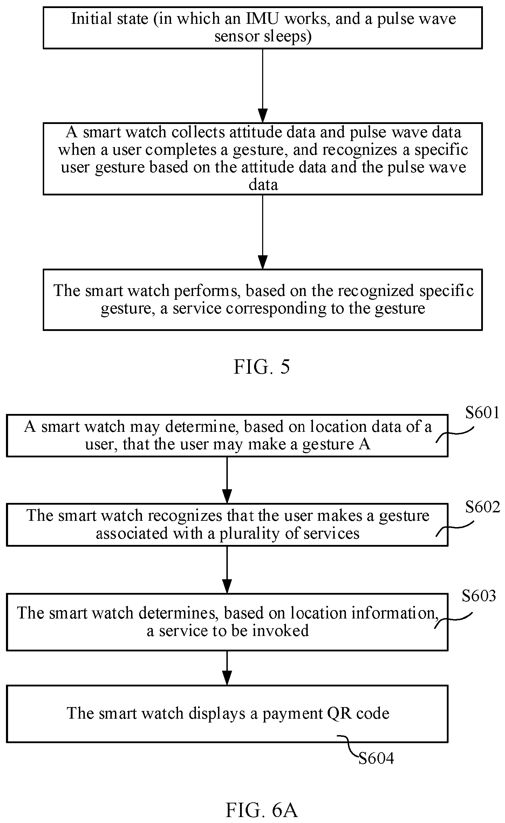

Therefore, without considering energy consumption, the gesture interaction method can also directly set the pulse wave sensor and the IMU to the working state at the initial state. Then, the gesture classifier may recognize the gesture directly by obtaining the attitude data and the pulse wave data of the specific gesture. For the foregoing method for directly obtaining the attitude data and the pulse wave data of the specific gesture, reference is made to FIG. 5. Details are not described herein again.

By implementing the method provided in this embodiment of this application, the smart watch may simultaneously obtain various data for completing the specific gesture by the user, for example, the attitude data and the pulse wave data described above. By combining different types of data to determine the user gesture, the smart watch can improve robustness of recognizing the user gesture.

This is because when data indicating the gesture type is abundant, larger noise interference included in a type of data has little impact on the whole. That is, the interference can be reduced by other types of data. For example, in an outdoor walking scenario, an arm of the user swings. If the user makes a specific gesture at this time, for example, a finger rubbing gesture, the attitude data collected by the IMU at this time includes larger noise interference, and the foregoing noise comes from arm swinging. Therefore, in this case, a recognition result obtained by recognizing the user gesture based on the attitude data has a larger error. In other words, the recognition is inaccurate. However, the interference of arm swinging does not affect an operation of the pulse wave sensor (the pulse wave sensor is affected only by light and skin tone). Therefore, the pulse wave data collected by the pulse wave sensor in this case may be better used for recognizing the user gesture.

Similarly, in the strong sunlight scenario, the pulse wave data includes larger noise. In this case, the attitude data of the gesture may reduce impact of noise of the pulse wave data on gesture recognition.

In general, in a process of performing recognition by combining the attitude data and the pulse wave data, when the attitude data includes larger noise interference, the pulse wave data may assist in recognition, thereby improving the accuracy of gesture recognition. Similarly, when the pulse wave data includes larger noise interference, the attitude data may assist in recognition, thereby improving the accuracy of gesture recognition. Therefore, the gesture recognition method combining the attitude data and the pulse wave data has better robustness and stronger ability to adapt to different scenarios.

**When one gesture corresponds to a plurality of services, the smart watch can further determine, with reference to location data, which service in the plurality of services should be performed.** **FIG. 6A** **shows a flowchart of the foregoing method.**

**S601: The smart watch obtains the location data of a user.**

First, before starting to recognize a user gesture, the smart watch may obtain the location data of the user. The location data may be obtained through a wireless fidelity (Wireless Fidelity, Wi-Fi) network, a global positioning system (Global Positioning System, GPS), or a cellular network connected to the device. Not limited to the foregoing method, the smart watch may further determine a location of the user through another method. This is not limited in embodiments of this application.

After obtaining the location data of the user, the smart watch may determine whether the user is in a place where a payment behavior occurs. For example, the location data obtained by the smart watch may indicate that the user is in a shopping mall.

**S602: The smart watch recognizes that the user makes a gesture associated with a plurality of services.**

After determining the location of the user, the smart watch may detect whether the user completes a specific gesture. For the foregoing process of recognizing whether the user completes the specific gesture, refer to the description of the foregoing embodiment, and details are not described herein again.

In this embodiment of this application, one gesture may be associated with a plurality of services. For example, a service associated with a finger rubbing gesture may include: displaying a payment QR code, displaying a schedule reminder interface, and the like.

**S603: The smart watch determines, based on the location data, a service to be invoked.**

When the smart watch recognizes one gesture associated with a plurality of services, the smart watch may determine, based on the location data, which service in the plurality of services should be performed.

For example, when the smart watch recognizes the finger rubbing gesture, in response to the gesture, the smart watch can perform the following services: displaying a payment QR code, and displaying a schedule reminder interface. In this case, with reference to the location data (which is that the user is in a shopping mall), the smart watch may determine to perform the service of "displaying a payment QR code".

**S604: The smart watch displays the payment QR code.**

This is not limited to the payment scenario described above. The method for determining, based on the location data, which service in the plurality of services should be performed may be further applied to another scenario. For example, in a smart home scenario, the smart watch may remotely control working states of a plurality of electronic devices at home. In this case, when a gesture of turning on switches of the plurality of electronic devices is recognized, the smart watch may determine, based on a distance between the location of the user (that is, the location of the watch) and the plurality of electronic devices, a switch of an electronic device that should be turned on.

By implementing the method shown in FIG. 6A, the user may control a plurality of services by using one gesture. In this way, as a quantity of different services increases, the user does not need to consider a gesture to be added, to match an increasing service. For the smart watch, the smart watch may further determine an intention of the user based on recognizing the user gesture, thereby providing better user experience for the user.

Compared with recognizing the gesture made by the user as another gesture, and then performing a service corresponding to the another gesture, the user prefers that the smart watch can obtain a more accurate recognition result by performing two or three times of recognition. This is because, when misrecognition occurs, in response to the recognition result (that is, the gesture), the smart watch performs a service associated with the gesture. Once the non-user-intent service is performed, the user has to close an application opened due to misrecognition, and re-open an application that the user actually wants to use. This greatly affects user experience.

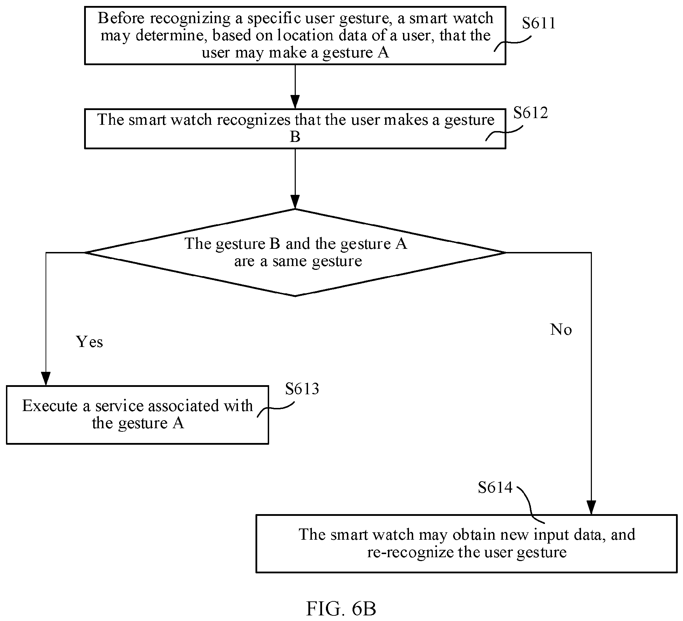

Therefore, this embodiment of this application further provides a gesture recognition method. In the method, based on the location data described in the foregoing embodiment, the smart watch may verify whether the recognized gesture is correct. For a specific procedure of the method, refer to FIG. 6B.

As shown in FIG. 6B, first, before recognizing a specific user gesture, a smart watch may determine, based on location data of the user, that the user may make a gesture A (S611).

Specifically, in an initial state, the smart watch may obtain the location data of the user through a Wi-Fi network, a GPS, or a cellular network connected to the device. Based on the location data, the smart watch may determine that the user may complete a specific gesture (which is the gesture A). An association relationship between the location data and the gesture is stored in the smart watch in advance.

Refer to descriptions in FIG. 2A and FIG. 5. The pulse wave sensor of the smart watch in the initial state may be in the sleep state, or may be in the working state herein.

Similarly, using a payment scenario as an example, the smart watch may determine, based on the location data of the user, that the user is in a business place such as a shopping mall. In the shopping mall, the user is very likely to use the smart watch for a payment service. In other words, the user is very likely to make a gesture associated with the payment service. Therefore, based on the location data, after the smart watch records that a specific gesture is associated with the payment service, the smart watch may determine that the user completes the gesture associated with the payment service.

For example, the finger rubbing gesture may correspond to the service of "displaying a payment QR code". In this case, after determining that the user is in a business place such as a shopping mall, the smart watch may determine that the user completes the finger rubbing gesture.

**S612: The smart watch recognizes that the user makes a gesture B.**

After completing the step shown in S612, the smart watch may detect whether the user completes the specific gesture. The smart watch may recognize that the user makes a gesture A. For the foregoing process of recognizing whether the user completes the specific gesture, refer to the description of the foregoing embodiment, and details are not described herein again.

**S613: The smart watch determines that the gesture B and the gesture A are a same gesture, and performs a service associated with the gesture A.**

After recognizing that the user makes the gesture B, the smart watch may first determine whether the gesture B and the gesture A are the same gesture. When the gesture B and the gesture A are the same gesture, in response to the gesture, the smart watch may perform the service associated with the gesture A.

For example, the gesture A is the finger rubbing gesture associated with the service of "displaying a payment QR code". When the gesture B is the finger rubbing gesture, the smart watch may confirm that the user makes the finger rubbing gesture. In this case, the smart watch may perform the service of "displaying a payment QR code".

**S614: When determining that the gesture B and the gesture A are different gestures, the smart watch may obtain new input data, and re-recognize the user gesture.**

When the gesture B and the gesture A are different gestures, the smart watch may not first perform a service corresponding to the gesture B, but re-obtain attitude data and pulse wave data of the user, and re-recognize the user gesture.

The smart watch may re-obtain input data, because when a service that the user wants to perform is not performed, the user completes a gesture corresponding to the service for a plurality of times. Refer to the attitude data and the pulse wave data shown in FIG. 4. After the moment T4, if the smart watch does not respond to a user gesture in a previous process, the user may repeat the gesture two or three times. Therefore, after the moment T4, the gesture classifier may further continue to receive the attitude data and the pulse wave data of the user that are sent by the sensor. Optionally, when recognizing that the gesture B and the gesture A are different gestures, the smart watch may further display, on a screen, a message reminding the user to complete the gesture again. According to a prompt message, the user may also complete the gesture again. In this way, the smart watch may also obtain new attitude data and pulse wave data.

Based on the re-obtained attitude data and the pulse wave data, the smart watch may re-recognize the user gesture. In this case, if a re-recognition result is still the gesture B, the smart watch may perform the service corresponding to the gesture B. Certainly, the smart watch may re-recognize again. A quantity of re-recognition times is not limited in this application.

If the re-recognition result is still the gesture A, the smart watch may perform the service corresponding to the gesture A.

For example, in the payment scenario described above, if the gesture that is recognized by the smart watch and that is made by the user is a fist clenching gesture (which is the gesture B), that is, it is not the finger rubbing gesture (which is the gesture A) associated with the payment service, the smart watch may not first perform the service corresponding to the fist clenching gesture. It is assumed that the fist clenching gesture is corresponding to a service of "playing a next song". In this case, the smart watch may not first perform the service of playing a next song, but re-recognize the user gesture. Therefore, the smart watch may re-obtain the attitude data and the pulse wave data of the user. Based on the foregoing data, the smart watch may continue to recognize the user gesture.

When the re-recognition result is still the fist clenching gesture, in response to the gesture, the smart watch may perform a service associated with the fist clenching gesture, that is, the service of "playing a next song". When the re-recognition result is the finger rubbing gesture, in response to the gesture, the smart watch may perform the payment service (which is displaying a payment QR code).

By implementing the method shown in FIG. 6B, the smart watch may estimate, in advance, a gesture that is most likely to occur based on the location of the user. If the gesture is easily misrecognized as another gesture, in this case, the smart watch may disable the another gesture in advance. In this way, even if the gesture is misrecognized as the another gesture, the smart watch does not immediately perform a service corresponding to the another gesture, so that a response error can be avoided as far as possible. Therefore, the smart watch can re-recognize the gesture. The gesture interaction method shown in FIG. 6B is implemented to reduce response errors caused by misrecognition. This also provides a basis for a plurality of times of recognition. Further, when the user continuously completes a same gesture for a plurality of times, the smart watch is more likely to correctly recognize the user gesture, to make a correct response, thereby improving user experience.

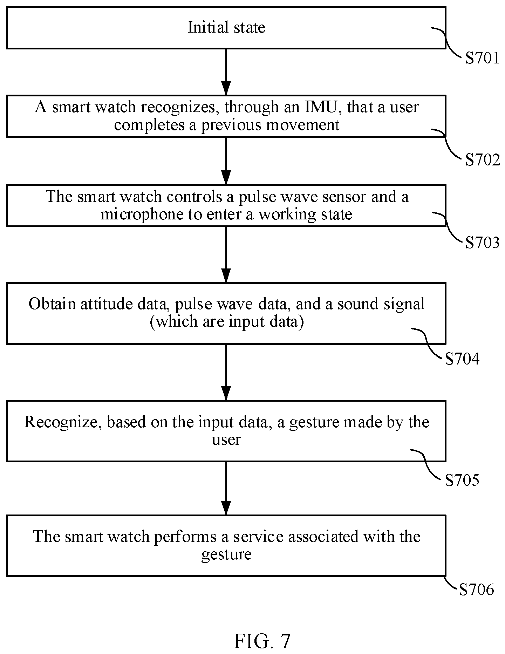

In some other implementations, in a process of recognizing a specific gesture, the smart watch may further collect a sound signal of the gesture. By combining the attitude data, the pulse wave data, and the sound signal described above, the smart watch can more accurately recognize the user gesture. **With reference to** **FIG. 7****, the following describes a flowchart of a gesture interaction method combined with a sound signal.**

As shown in FIG. 7, first, a smart watch in an initial state **(S701)** may recognize a previous movement of a user **(S702).** The initial state here refers to a state in which an IMU works, a pulse wave sensor sleeps (or is in a low-power operation mode), and a microphone sleeps (or is in the low-power operation mode). In response to an operation of completing the previous movement by the user, the smart watch may control the pulse wave sensor and the microphone to enter a working state **(S703).** For a specific process in which the smart watch recognizes the previous movement and controls the pulse wave sensor to enter the working state, refer to the description of the foregoing embodiments. Details are not described herein again.

Similar to the pulse wave sensor, after recognizing that the user completes the previous movement, the smart watch may send a control signal to the microphone. In response to the control signal, the microphone may enter the working state. The microphone in the working state can collect the sound signal in an environment.

Optionally, between the steps shown in S702 and S703, the smart watch may further obtain location data of the user, and determine an environment in which the user is located. For the foregoing process, refer to the method shown in FIG. 6A or FIG. 6B. Details are not described herein again.

After the pulse wave sensor and the microphone enter the working state, the smart watch may obtain input data for completing a specific gesture by the user **(S704).** The input data here includes attitude data, pulse wave data, and the sound signal of the specific gesture. The attitude data may be obtained from the IMU. The pulse wave data may be obtained from the pulse wave sensor. The sound signal may be obtained from the microphone.

The attitude data and the pulse wave data are described in detail in the foregoing embodiments. Details are not described herein again. In an embodiment of this application, the sound signal includes a sound made by another joint such as a finger when a gesture is completed. For example, in a process of completing a finger snapping gesture, the finger snapping gesture includes a sound. The smart watch may recognize, by learning the foregoing sound, whether the specific gesture completed by the user is the finger snapping gesture.

In this embodiment of this application, sampling frequency of the microphone may be 16 kHz. A length of a sliding window may be 320 points and a step may be 160 points. In this way, a gesture recognition algorithm can receive a plurality of sound signals of a size of the sliding window. Based on the foregoing input data (which is the attitude data, the pulse wave data, and the sound signal), the smart watch may recognize the gesture made by the user (S705). Specifically, after obtaining the data and the signal, the smart watch may send the attitude data and the pulse wave data in the input data to a gesture classifier, and input the sound signal in the input data to a sound recognition module. With reference to recognition results of the gesture classifier and the sound recognition module, the smart watch may recognize the gesture made by the user.

In a process in which the sound recognition module recognizes the sound signal, first, the sound recognition module may divide, through a sliding window having a preset length and a preset step, the sound signal collected by the microphone into a plurality of data blocks having the preset length. The preset length and the preset step of the sliding window here may be different from the length and the step of the sliding window used in the gesture classifier.

Then, the sound recognition module may use a one-dimensional convolutional neural network to extract a frequency feature of sound signal data blocks, for example, a mel-frequency cepstrum coefficient. Based on the frequency feature, the sound recognition module can obtain a recognition result. Then, with reference to the recognition result of the gesture classifier, the smart watch may determine that the user completes a gesture.

For example, when recognizing the finger snapping gesture, the smart watch may recognize, based on attitude data and pulse wave data of finger snapping, and a sound signal generated by the finger snapping, that the user completes a finger snapping movement.

**(S706)** After recognizing the user gesture based on the attitude data, the pulse wave data, and the sound signal, the smart watch may perform a service associated with the gesture. For example, in a case that the finger snapping gesture is associated with a call answering service, when recognizing the finger snapping gesture, the smart watch may answer a call.

The gesture interaction method shown in FIG. 7 is implemented. In a process in which the smart watch recognizes the user gesture, the smart watch may recognize a user gesture based on the attitude data and the pulse wave data, and may further recognize the specific user gesture based on the sound signal. In this way, the smart watch can recognize the user gesture more accurately.

In another gesture interaction method combined with the sound signal, the smart watch may not distinguish the sound signal in the input data. In other words, the attitude data, the pulse wave data and the sound signal in the input data can be recognized by one classifier.

Refer to FIG. 3A. When the gesture recognition algorithm learns a user gesture, a sample learned by the gesture recognition algorithm may further include the sound signal in addition to the attitude data and the pulse wave data of the gesture. In this way, when recognizing the gesture including the sound signal, the gesture recognition algorithm may determine the user gesture based on the foregoing three types of data. Details are not described herein again.

In this embodiment of this application, after the previous movement is recognized, the attitude data collected by the IMU may be referred to as first attitude data. The attitude data used for recognizing the previous movement may be referred to as second attitude data.

A first gesture is, for example, a finger rubbing gesture. A first operation is, for example, a payment operation associated with the finger rubbing gesture (that is, displaying a user interface including a payment QR code). A first location is, for example, a location where payment behavior often occurs, including a shopping mall, a convenience store, and the like. The window having a length of 100 and a step of 10 described in FIG. 2A may be referred to as a first window. A first length is 100 data points.

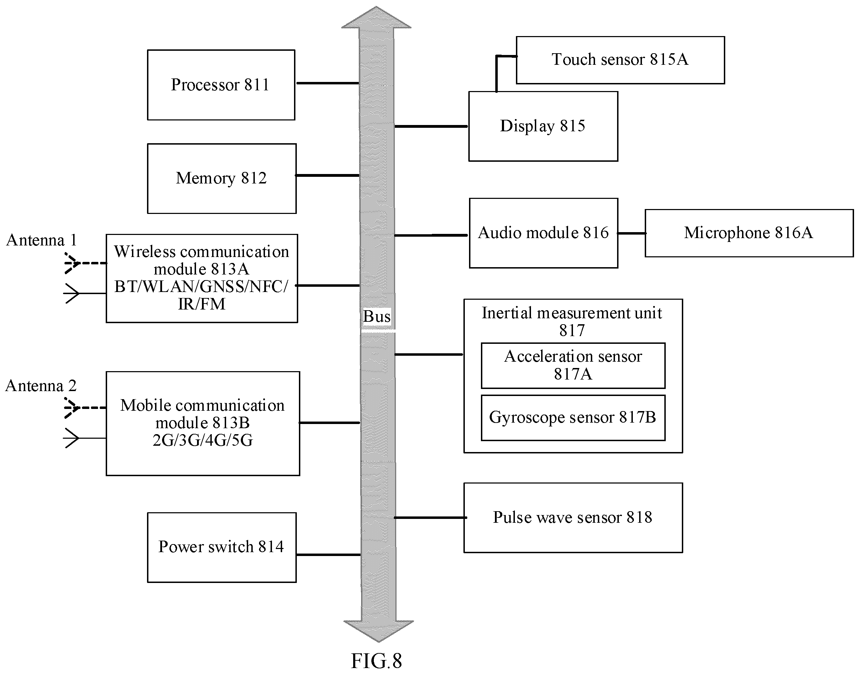

For example, an apparatus for implementing the gesture interaction method is the smart watch. With reference to a hardware diagram shown in FIG. 8, the following specifically describes a hardware structure of the smart watch. This is not limited to a smart watch. The apparatus may alternatively be a smart band, or the like.

As shown in FIG. 8, the smart watch may include a processor 811, a memory 812, a wireless communication module 813A, a mobile communication module 813B, a power switch 814, a display 815, an audio module 816, an inertial measurement unit 817, and a pulse wave sensor 818. The processor 811 may include one or more processing units, for example, the processor 811 may include an application processor (application processor, AP), a modem processor, a graphics processing unit (graphics processing unit, GPU), an image signal processor (image signal processor, ISP), a controller, a memory, a video codec, a digital signal processor (digital signal processor, a DSP), a baseband processor, and/or a neural-network processing unit (neural-network processing unit, NPU), or the like. Different processing units may be separate components, or may be integrated into one or more processors.

In an embodiment of this application, the application processor (AP) may support the smart watch in running various applications, for example, a WeChat^{®} application including a payment service, an Alipay^{®} application, and another application. The graphics processing unit (GPU) works with the display 815 to complete a display function of an image and a user interface, for example, displaying a payment QR code.

A controller may be a nerve center and a command center of the smart watch. The controller may generate an operation control signal based on an instruction operation code and a timing signal, and implement control on instruction fetching and instruction execution. In this embodiment of this application, the controller needs to provide support for processes such as the smart watch recognizing a user gesture, coordinating working of each sensor, controlling logical transition of each software and hardware module, and controlling a working state of an application.

A memory configured to store instructions and data may be further disposed in the processor 811. In some embodiments, the memory in the processor 811 is a cache. The memory may store instructions or data that is recently used or to be cyclically used by the processor 811. When needing to use the instructions or the data again, the processor 811 may directly call the instruction or the data from the memory. This avoids repeated accessing and reduces a wait time for the processor 811, thereby improving system efficiency.

The memory 812 is coupled to the processor 811, and is configured to store various software programs and/or a plurality of groups of instructions. The memory 812 may be configured to store computer-executable program code, and the executable program code includes instructions. The processor 811 executes various functional applications of the smart watch and data processing by running the instructions stored in the memory 812. The memory 812 may include a program storage area and a data storage area. The program storage area may store an operating system, an application required by at least one function (such as a sound playing function or an image playing function), and the like. The data storage area may store data (for example, audio data and image data to be displayed) created during use of the smart watch and the like. In addition, the memory 812 may include a high-speed random access memory, and may further include a nonvolatile memory, for example, at least one magnetic disk storage device, a flash memory device, or a universal flash storage (universal flash storage, UFS).

In this embodiment of this application, a software program and/or a plurality of groups of instructions that implement functions such as learning and recognizing a specific user gesture by the smart watch, and invoking a specific service based on the gesture may be stored in the memory 812. The software program and/or the plurality of groups of instructions further include various applications (APPs) installed on the smart watch, for example, WeChat^{®} and Alipay^{®}. Content stored in the memory 812 further includes user data corresponding to the application.

The wireless communication module 813A may provide a solution applied to the smart watch for wireless communications including wireless local area networks (wireless local area networks, WLANs) (such as a wireless fidelity (wireless fidelity, Wi-Fi) network), Bluetooth (Bluetooth, BT), global navigation satellite system (global navigation satellite system, GNSS), frequency modulation (frequency modulation, FM), near-field communication (near-field communication, NFC), infrared (infrared, IR), and the like. The wireless communication module 813A may be one or more components integrating at least one communication processor module. The wireless communication module 813A receives the electromagnetic wave through the antenna 1, performs frequency modulation and filtering processing on the electromagnetic wave signal, and sends the processed signal to the processor 811. The wireless communication module 813A may further receive a to-be-sent signal from the processor 811, perform frequency modulation and amplification on the signal, and convert the signal into an electromagnetic wave through the antenna 1.

In some embodiments, the antenna 2 of the smart watch is coupled to the mobile communication module 813B, and the antenna 1 is coupled to the wireless communication module 813A, so that the smart watch can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

In the gesture interaction method for obtaining location data provided in this embodiment of this application, the smart watch may obtain the location data of the smart watch through the wireless communication module 813A, the mobile communication module 813B, and another wireless communication technology. The another wireless communication technology is, for example, the GNSS described above. When using a WLAN network, the smart watch may obtain a current location of the watch through the wireless communication module 813A. When using mobile cellular data communication, the smart watch may obtain the current location of the watch through the mobile communication module 813B. The smart watch may further obtain the current location of the watch through another positioning system such as a BDS or a GPS.

The power switch 814 may be configured to control power supply to supply power to the smart watch. In some embodiments, the power switch 814 may be configured to control external power supply to supply power to the smart watch.

The display 815 may be configured to display an image, a video, or the like. The display 815 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light-emitting diode (quantum dot light-emitting diode, QLED), or the like. In this embodiment of this application, the display 815 provides a smart watch with a function of displaying a user interface of a payment application and a payment QR code. In addition, the display 815 and the touch sensor 815A may form a touch screen, which is also referred to as a "touchscreen". In a control manner of touch interaction, in response to a touch operation of the user, for example, an operation such as tapping and sliding, the touchscreen may correspondingly switch a user interface, display or close a user interface of an application process, or the like. The audio module 816 may be configured to convert a digital audio signal into an analog audio signal output, or may be configured to convert an analog audio input into a digital audio signal. The audio module 816 may be further configured to encode and decode an audio signal. In some embodiments, the audio module 816 may be disposed in the processor 811, or some function modules of the audio module 816 may be disposed in the processor 811. The audio module 816 may transmit an audio signal to the wireless communication module 813 through a bus interface (for example, a UART interface), to implement a function of playing the audio signal through a Bluetooth speaker.

The smart watch may further include a microphone 816A, which is also referred to as a "mike" or a "sound transmitter", and is configured to convert a sound signal into an electrical signal. When a voice control instruction occurs, the user may make a voice through a human mouth, and input the sound signal to the microphone 816A. In this embodiment of this application, the microphone 816A may obtain a sound signal of a specific gesture when the user completes the gesture. Further, a gesture recognition algorithm may recognize the gesture by learning the sound signal of the gesture.

The inertial measurement unit 817 (IMU) may be configured to measure a three-axis attitude angle (or angular rate) and acceleration of an object. The inertial measurement unit 817 may include an acceleration sensor 817A and a gyroscope sensor 817B.

The acceleration sensor 817A includes a mass, a damper, an elastic element, a sensitive element, an adaptation circuit, and the like. The acceleration sensor 817A obtains an acceleration value through Newton's second law by measuring inertial force applied to the mass during acceleration. The acceleration sensor 817A may detect magnitudes of accelerations of an electronic device in all directions (usually on three axes), and may detect magnitude and a direction of gravity when the electronic device is static.

The gyroscope sensor 817B may determine angular velocity of an object around three axes (i.e., X, Y, and Z axes). Therefore, the gyroscope sensor 817B may generally be configured to determine a motion attitude of the object. In some embodiments, the gyroscope sensor 817B may be configured for photographing image stabilization. For example, when the shutter is pressed, the gyroscope sensor 817B detects an angle at which the electronic device jitters, and calculates, based on the angle, a distance that needs to be compensated by a lens module, so that a lens cancels the jitter of the electronic device through reverse motion, thereby implementing image stabilization. The gyroscope sensor 817B may be further configured for navigation and motion-controlled gaming scenarios.

In this embodiment of this application, the acceleration sensor 817A and/or the gyroscope sensor 817B may be configured to detect whether a hand of the user is in a horizontal state (horizontal detection). The horizontal detection may be used by the smart watch to determine whether the user is about to make a specific gesture. In a process in which the user completes a specific gesture, the acceleration sensor 817A and/or the gyroscope sensor 817B may further collect attitude data of the user gesture, to assist the smart watch in recognizing the user gesture from an aspect of the attitude data.

The pulse wave sensor 818 includes a light-emitting diode (LED) and an optical detector, such as a photodiode. The light-emitting diode may be a monochrome light-emitting diode, an infrared light-emitting diode, or the like. The monochrome light-emitting diode is, for example, a yellow light-emitting diode, a green light-emitting diode, or the like. The pulse wave sensor 818 obtains a pulse wave signal of the user through photoplethysmography (PPG). PPG is a method in which an optical detector obtains a human pulse wave signal by detecting energy of reflected light reflected by human skin, muscle, blood vessels, and another tissue.

In this embodiment, the pulse wave sensor 818 may support the smart watch to obtain a pulse wave signal when the user makes a specific gesture, to assist the smart watch to recognize the user gesture from an aspect of the pulse wave signal of the user.

The present invention mainly provides a gesture interaction method. The method may be applied to an electronic device that is inconvenient to perform a touch operation, such as a smart watch or a wristband. By implementing the method, the electronic device such as a smart watch can more accurately recognize a user gesture in a process in which the user completes the specific gesture. Particularly, when an environment in which the user is located changes significantly, the electronic device such as a smart watch can accurately recognize a user gesture.

A term "user interface (user interface, UI)" in the specification, claims, and accompanying drawings of the embodiments of this application is a medium interface for interaction and information exchange between an application or an operating system and a user, and implements conversion between an internal form of information and a form acceptable to the user. A user interface of an application program is source code written through a specific computer language such as Java or an extensible markup language (extensible markup language, XML). The interface source code is parsed and rendered on a terminal device, and finally presented as content that can be recognized by a user, for example, a control such as a picture, a text, or a button. A control (control) is also called a widget (widget), and is a basic element of a user interface. Typical controls include a toolbar (toolbar), a menu bar (menu bar), a text box (text box), a button (button), a scroll bar (scroll bar), an image, and text. An attribute and content of a control on the interface are defined through a tag or node. For example, in an XML file, the control on the interface is defined through the node such as <Textview>, <ImgView>, or <VideoView>. A node corresponds to a control or attribute on the interface. After being parsed and rendered, the node is displayed as visible content. In addition, an interface of many applications, such as a hybrid application (hybrid application), usually further includes a web page. The web page, also referred to as a page, may be understood as a special control embedded in a user interface of an application. The web page is source code written in a specific computer language, for example, a hypertext markup language (hypertext markup language, HTML), cascading style sheets (cascading style sheets, CSS), or JavaScript (JavaScript, JS). The web page source code may be loaded and displayed as user-recognizable content by a browser or a web page display component with a function similar to a function of the browser. Specific content contained in the web page is also defined by tags or nodes in the web page source code. For example, GTML defines elements and attributes of the web page through <p>, <img>, <video>, and <canvas>.

A common representation form of the user interface is a graphical user interface (graphic user interface, GUI), which refers to a user interface that is displayed in a graphical manner and that is related to a computer operation. It may be an interface element such as an icon, a window, or a control displayed on a display of the electronic device. The control may include a visual interface element such as an icon, a button, a menu, a tab, a text box, a dialog box, a status bar, a navigation bar, and a widget.

As used in the specification and appended claims of this application, terms "a", "one", "the", "the foregoing", and "this" of singular forms are intended to also include plural forms, unless otherwise clearly specified in the context. It should be further understood that the term "and/or" as used in this application refers to and includes any or all possible combinations of one or more of the listed items. According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in the foregoing embodiments may be implemented by a computer program instructing related hardware. The program may be stored in a computer-readable storage medium. When the program is executed, the procedures of the methods in embodiments may be performed. The foregoing storage medium includes: any medium that can store program code, such as a ROM, a random access memory RAM, a magnetic disk, or an optical disc.

## Claims

1. A gesture interaction method, wherein the method is applied to a smart wearable electronic device, and the method comprises:
collecting first attitude data through an inertial measurement unit (1211);
collecting pulse wave data through a pulse wave sensor (1212) when collecting the first attitude data;
determining, based on the first attitude data and the pulse wave data, that a user (11) makes a first gesture; and
performing a first operation in response to determining that the user (11) makes the first gesture,
**characterized in that**
before the collecting first attitude data through an inertial measurement unit (1211), the method further comprises:
collecting second attitude data through the inertial measurement unit (1211);
determining, based on the second attitude data, that the user (11) makes a previous movement; and
turning on the pulse wave sensor (1212) in response to determining that the user (11) makes the previous movement.

2. The method according to claim 1, wherein the method further comprises:
lighting up a screen in response to determining that the user (11) makes the previous movement.

3. The method according to any one of claims 1 to 2, wherein the first gesture corresponds to a plurality of operations, and before the determining, based on the first attitude data and the pulse wave data, that a user (11) makes a first gesture, the method further comprises:
obtaining location data of the user (11);
determining, based on the location data, that the user (11) is in a first location; and
performing the first operation when determining that the user (11) makes the first gesture at the first location.

4. The method according to any one of claims 1 to 3, wherein the determining, based on the first attitude data and the pulse wave data, that a user (11) makes a first gesture specifically comprises:
obtaining a first attitude data block and a first pulse wave data block from the first attitude data and the pulse wave data through a first window, wherein the first window has a first length;
filtering the first attitude data block and the first pulse wave data block to obtain a second attitude data block and a second pulse wave data block;
calculating first features of the second attitude data block and the second pulse wave data block; and
determining, based on the first features, that the user (11) makes the first gesture.

5. The method according to any one of claims 1 to 2, wherein the method further comprises:
obtaining location data; and
displaying a first interface when determining that the location data is a first location and a gesture made by the user (11) is not the first gesture, wherein the first interface is used for prompting the user (11) to repeat the previous gesture.

6. The method according to any one of claims 1 to 5, wherein
the performing a first operation specifically comprises: displaying a user interface comprising a payment QR code.

7. The method according to claim 1, wherein the method further comprises:
turning on a microphone in response to determining that the user (11) makes the previous movement;
collecting a sound signal through the microphone; and
the determining, based on the first attitude data and the pulse wave data, that a user (11) makes a first gesture further comprises:
determining, based on the first attitude data, the pulse wave data, and the sound signal, whether the user (11) makes the first gesture.

8. The method according to claim 7, wherein the determining, based on the first attitude data, the pulse wave data, and the sound signal, whether the user (11) makes the first gesture specifically comprises:
determining, based on first features of the first attitude data and the pulse wave data, and a frequency feature of the sound signal, whether the user (11) makes the first gesture.

9. The method according to claim 4 or 8, wherein the first features comprise two or more of the following features: a wave trough feature, a vibration feature, a crest factor, a waveform factor, a root mean square frequency, and a feature that represents a degree of dispersion and concentration of a spectrum.

10. The method according to any one of claims 1 to 9, wherein
the first attitude data and the second attitude data comprises: one or more of X-axis acceleration data, Y-axis acceleration data, Z-axis acceleration data, and three-axis acceleration amplitude data; and
the pulse wave data comprises: one or more of infrared light data and green light data.

11. The method according to claim 3, wherein the method further comprises:
obtaining location data of the user (11);
determining, based on the location data, that the user (11) is in a second location; and
performing a second operation when determining that the user (11) makes the first gesture at the second location, wherein the first gesture corresponds to the first operation and the second operation.

12. An electronic device, comprising one or more processors (811) and one or more memories (812), wherein the one or more memories (812) are coupled to the one or more processors (811), the one or more memories (812) are configured to store computer program code, the computer program code comprises computer instructions, and when the one or more processors (811) execute the computer instructions, the method according to any one of claims 1 to 11 is performed.

13. A computer-readable storage medium, comprising instructions, wherein when the instructions are run on an electronic device, the method according to any one of claims 1 to 11 is performed.

## Patentansprüche

1. Gesteninteraktionsverfahren, wobei das Verfahren auf eine intelligente tragbare elektronische Vorrichtung angewendet wird und das Verfahren Folgendes umfasst:
Erfassen erster Haltungsdaten über eine Trägheitsmesseinheit (1211);
Erfassen von Pulswellendaten über einen Pulswellensensor (1212) beim Erfassen der ersten Haltungsdaten;
Bestimmen basierend auf den ersten Haltungsdaten und den Pulswellendaten, dass ein Benutzer (11) eine erste Geste ausführt; und
Durchführen einer ersten Operation als Reaktion auf das Bestimmen, dass der Benutzer (11) die erste Geste ausführt,
**dadurch gekennzeichnet, dass**
das Verfahren vor dem Erfassen der ersten Haltungsdaten über eine Trägheitsmesseinheit (1211) ferner Folgendes umfasst:
Erfassen von zweiten Haltungsdaten über die Trägheitsmesseinheit (1211);
Bestimmen basierend auf den zweiten Haltungsdaten, dass der Benutzer (11) eine vorherige Bewegung ausführt; und
Einschalten des Pulswellensensors (1212) als Reaktion auf das Bestimmen, dass der Benutzer (11) die vorherige Bewegung ausführt.

2. Verfahren nach Anspruch 1, wobei das Verfahren ferner Folgendes umfasst:
Aufleuchten eines Bildschirms als Reaktion darauf, dass der Benutzer (11) die vorherige Bewegung ausführt.

3. Verfahren nach einem der Ansprüche 1 bis 2, wobei die erste Geste einer Vielzahl von Operationen entspricht, und das Verfahren vor dem Bestimmen basierend auf den ersten Haltungsdaten und den Pulswellendaten, dass ein Benutzer (11) eine erste Geste ausführt, ferner Folgendes umfasst:
Ermitteln von Standortdaten des Benutzers (11);
Bestimmen basierend auf Standortdaten, dass sich der Benutzer (11) an einem ersten Standort befindet; und
Durchführen der ersten Operation beim Bestimmen, dass der Benutzer (11) die erste Geste an dem ersten Standort ausführt.

4. Verfahren nach einem der Ansprüche 1 bis 3, wobei das Bestimmen basierend auf den ersten Haltungsdaten und den Pulswellendaten, dass ein Benutzer (11) eine erste Geste ausführt, speziell Folgendes umfasst:
Ermitteln eines ersten Haltungsdatenblocks und eines ersten Pulswellendatenblocks aus den ersten Haltungsdaten und den Pulswellendaten über ein erstes Fenster, wobei das erste Fenster eine erste Länge aufweist;
Filtern des ersten Haltungsdatenblocks und des ersten Pulswellendatenblocks, um einen zweiten Haltungsdatenblock und einen zweiten Pulswellendatenblock zu ermitteln;
Berechnen erster Merkmale des zweiten Haltungsdatenblocks und des zweiten Pulswellendatenblocks; und
Bestimmen basierend auf den ersten Merkmalen, dass der Benutzer (11) die erste Geste ausführt.

5. Verfahren nach einem der Ansprüche 1 bis 2, wobei das Verfahren ferner Folgendes umfasst:
Ermitteln von Standortdaten; und
Anzeigen einer ersten Schnittstelle beim Bestimmen, dass die Standortdaten ein erster Standort sind und eine durch den Benutzer (11) ausgeführte Geste nicht die erste Geste ist, wobei die erste Schnittstelle zum Auffordern des Benutzers (11) verwendet wird, die vorherige Geste zu wiederholen.

6. Verfahren nach einem der Ansprüche 1 bis 5, wobei
das Durchführen einer ersten Operation speziell Folgendes umfasst: Anzeigen einer Benutzerschnittstelle, umfassend einen QR-Code für Zahlungen.

7. Verfahren nach Anspruch 1, wobei das Verfahren ferner Folgendes umfasst:
Einschalten eines Mikrofons als Reaktion auf das Bestimmen, dass der Benutzer (11) die vorherige Bewegung ausführt;
Erfassen eines Tonsignals über das Mikrofon; und
das Bestimmen basierend auf den ersten Haltungsdaten und den Pulswellendaten, dass ein Benutzer (11) eine erste Geste ausführt, ferner Folgendes umfasst:
Bestimmen basierend auf den ersten Haltungsdaten, den Pulswellendaten und dem Tonsignal, ob der Benutzer (11) die erste Geste ausführt.

8. Verfahren nach Anspruch 7, wobei das Bestimmen basierend auf den ersten Haltungsdaten, den Pulswellendaten und dem Tonsignal, ob der Benutzer (11) die erste Geste ausführt, speziell Folgendes umfasst:
Bestimmen basierend auf ersten Merkmalen der ersten Haltungsdaten und der Pulswellendaten und einem Frequenzmerkmal des Tonsignals, ob der Benutzer (11) die erste Geste ausführt.

9. Verfahren nach Anspruch 4 oder 8, wobei die ersten Merkmale zwei oder mehrere der folgenden Merkmale umfassen: ein Wellentalmerkmal, ein Schwingungsmerkmal, einen Scheitelfaktor, ein Wellenformfaktor, eine Effektivfrequenz und ein Merkmal, das einen Dispersions- und Konzentrationsgrad eines Spektrums darstellt.

10. Verfahren nach einem der Ansprüche 1 bis 9, wobei
die ersten Haltungsdaten und die zweiten Haltungsdaten Folgendes umfassen: eine oder mehrere Daten zur X-Achsen-Beschleunigung, Daten zur Y-Achsen-Beschleunigung, Daten zur Z-Achsen-Beschleunigung und Daten zur dreiachsigen Beschleunigungsamplitude; und
die Pulswellendaten Folgendes umfassen: eines oder mehrere der Infrarotlichtdaten und Grünlichtdaten.

11. Verfahren nach Anspruch 3, wobei das Verfahren ferner umfasst:
Ermitteln von Standortdaten des Benutzers (11);
Bestimmen basierend auf Standortdaten, dass sich der Benutzer (11) an einem zweiten Standort befindet; und
Durchführen einer zweiten Operation beim Bestimmen, dass der Benutzer (11) die erste Geste an dem zweiten Standort ausführt, wobei die erste Geste der ersten Operation und der zweiten Operation entspricht.

12. Elektronische Vorrichtung, umfassend einen oder mehrere Prozessoren (811) und einen oder mehrere Speicher (812), wobei der eine oder die mehreren Speicher (812) an den einen oder die mehreren Prozessoren (811) gekoppelt sind, der eine oder die mehreren Speicher (812) dazu konfiguriert sind, einen Computerprogrammcode zu speichern, der Computerprogrammcode Computeranweisungen umfasst und, wenn der eine oder die mehreren Prozessoren (811) die Computeranweisungen ausführen, das Verfahren nach einem der Ansprüche 1 bis 11 durchgeführt wird.

13. Computerlesbares Speichermedium, umfassend Anweisungen, wobei, wenn die Anweisungen auf einer elektronischen Vorrichtung ausgeführt werden, das Verfahren nach einem der Ansprüche 1 bis 11 durchgeführt wird.

## Revendications

1. Procédé d'interaction gestuelle, dans lequel le procédé est appliqué à un dispositif électronique portable intelligent, et le procédé comprend :
la collecte de premières données d'attitude au moyen d'une unité de mesure inertielle (1211) ;
la collecte de données d'ondes de pouls au moyen d'un capteur d'ondes de pouls (1212) lors de la collecte des premières données d'attitude ;
la détermination, sur la base des premières données d'attitude et des données d'ondes de pouls, qu'un utilisateur (11) effectue un premier geste ; et
la réalisation d'une première opération en réponse à la détermination que l'utilisateur (11) effectue le premier geste, **caractérisé en ce que**, avant la collecte de premières données d'attitude au moyen d'une unité de mesure inertielle (1211), le procédé comprend également :
la collecte de secondes données d'attitude au moyen de l'unité de mesure inertielle (1211) ;
la détermination, sur la base des secondes données d'attitude, que l'utilisateur (11) effectue un mouvement précédent ; et
l'activation du capteur d'ondes de pouls (1212) en réponse à la détermination que l'utilisateur (11) effectue le mouvement précédent.

2. Procédé selon la revendication 1, dans lequel le procédé comprend également :
l'éclairage d'un écran en réponse à la détermination que l'utilisateur (11) effectue le mouvement précédent.

3. Procédé selon l'une quelconque des revendications 1 à 2, dans lequel le premier geste correspond à une pluralité d'opérations, et avant la détermination, sur la base des premières données d'attitude et des données d'ondes de pouls, qu'un utilisateur (11) effectue un premier geste, le procédé comprend également :
l'obtention de données de localisation de l'utilisateur (11) ;
la détermination, sur la base des données de localisation, que l'utilisateur (11) se trouve dans un premier emplacement ; et
la réalisation de la première opération lors de la détermination que l'utilisateur (11) effectue le premier geste au premier emplacement.

4. Procédé selon l'une quelconque des revendications 1 à 3, dans lequel la détermination, sur la base des premières données d'attitude et des données d'ondes de pouls, qu'un utilisateur (11) effectue un premier geste comprend notamment :
l'obtention d'un premier bloc de données d'attitude et d'un premier bloc de données d'ondes de pouls à partir des premières données d'attitude et des données d'ondes de pouls à travers une première fenêtre, dans lequel la première fenêtre a une première longueur ; le filtrage du premier bloc de données d'attitude et du premier bloc de données d'ondes de pouls pour obtenir un second bloc de données d'attitude et un second bloc de données d'ondes de pouls ; le calcul de premières caractéristiques du second bloc de données d'attitude et du second bloc de données d'ondes de pouls ; et
la détermination, sur la base des premières caractéristiques, que l'utilisateur (11) effectue le premier geste.

5. Procédé selon l'une quelconque des revendications 1 à 2, dans lequel le procédé comprend également :
l'obtention de données de localisation ; et
l'affichage d'une première interface lors de la détermination que les données de localisation sont un premier emplacement et qu'un geste effectué par l'utilisateur (11) n'est pas le premier geste, dans lequel la première interface est utilisée pour inviter l'utilisateur (11) à répéter le geste précédent.

6. Procédé selon l'une quelconque des revendications 1 à 5, dans lequel
la réalisation d'une première opération comprend notamment : l'affichage d'une interface utilisateur comprenant un code QR de paiement.

7. Procédé selon la revendication 1, dans lequel le procédé comprend également :
l'activation d'un microphone en réponse à la détermination que l'utilisateur (11) effectue le mouvement précédent ;
la collecte d'un signal sonore au moyen du microphone ; et
la détermination, sur la base des premières données d'attitude et des données d'ondes de pouls, qu'un utilisateur (11) effectue un premier geste comprend également :
le fait de déterminer, sur la base des premières données d'attitude, des données d'ondes de pouls et du signal sonore, si l'utilisateur (11) effectue le premier geste.

8. Procédé selon la revendication 7, dans lequel le fait de déterminer, sur la base des premières données d'attitude, des données d'ondes de pouls et du signal sonore, si l'utilisateur (11) effectue le premier geste comprend notamment :
le fait de déterminer, sur la base de premières caractéristiques des premières données d'attitude et des données d'ondes de pouls, et d'une caractéristique de fréquence du signal sonore, si l'utilisateur (11) effectue le premier geste.

9. Procédé selon la revendication 4 ou 8, dans lequel les premières caractéristiques comprennent deux ou plusieurs des caractéristiques suivantes : une caractéristique de creux d'onde, une caractéristique de vibration, un facteur de crête, un facteur de forme d'onde, une fréquence quadratique moyenne et une caractéristique qui représente un degré de dispersion et de concentration d'un spectre.

10. Procédé selon l'une quelconque des revendications 1 à 9, dans lequel
les premières données d'attitude et les secondes données d'attitude comprennent : l'une ou plusieurs des données d'accélération sur l'axe X, sur l'axe Y, sur l'axe Z et des données d'amplitude d'accélération sur les trois axes ; et
les données d'ondes de pouls comprennent : l'une ou plusieurs données de lumière infrarouge et de lumière verte.

11. Procédé selon la revendication 3, dans lequel le procédé comprend également :
l'obtention de données de localisation de l'utilisateur (11) ;
la détermination, sur la base des données de localisation, que l'utilisateur (11) se trouve dans un second emplacement ; et
la réalisation d'une seconde opération lors de la détermination que l'utilisateur (11) effectue le premier geste au second emplacement, dans lequel le premier geste correspond à la première opération et à la seconde opération.

12. Dispositif électronique, comprenant un ou plusieurs processeurs (811) et une ou plusieurs mémoires (812), dans lequel les une ou plusieurs mémoires (812) sont couplées aux un ou plusieurs processeurs (811), les une ou plusieurs mémoires (812) sont configurées pour stocker un code de programme informatique, le code de programme informatique comprend des instructions informatiques, et lorsque les un ou plusieurs processeurs (811) exécutent les instructions informatiques, le procédé selon l'une quelconque des revendications 1 à 11 est réalisé.

13. Support de stockage lisible par ordinateur, comprenant des instructions, dans lequel, lorsque les instructions sont exécutées sur un dispositif électronique, le procédé selon l'une quelconque des revendications 1 à 11 est réalisé.
